(19) Europäisches Patentamt

European Patent Office

Office européen des brevets

(11) **EP 2 813 530 A1**

(12) **EUROPÄISCHE PATENTANMELDUNG**

(43) Veröffentlichungstag:
**17.12.2014 Patentblatt 2014/51**

(21) Anmeldenummer: **13171645.8**

(22) Anmeldetag: **12.06.2013**

(51) Int Cl.:
*C08G 69/26* (2006.01)     *C08G 69/36* (2006.01)
*C08L 77/06* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **BASF SE**
**67056 Ludwigshafen (DE)**

(72) Erfinder: **Die Erfindernennung liegt noch nicht vor**

(74) Vertreter: **Reitstötter Kinzebach**
**Patentanwälte**
**Im Zollhof 1**
**67061 Ludwigshafen (DE)**

(54) **Teilaromatische Copolyamide auf Basis von Terephthalsäure und Hexamethylendiamin**

(57) Die Erfindung betrifft teilaromatische Copolyamide auf Basis von Terephthalsäure und Hexamethylendiamin, die wenigstens 68 Mol-% Wiederholungseinheiten aufweisen, welche von Terephthalsäure und Hexamethylendiamin abgeleitet sind, die eine Schmelzenthalpie $\Delta H(2)$ von wenigstens 40 J/g, insbesondere wenigstens 45 J/g und ein Verhältnis von Tg(2) zu $T_m(2)$ von wenigstens 0,71, insbesondere wenigstens 0,72 und speziell wenigstens 0,73 aufweisen, wobei $T_m(2)$ die Schmelztemperatur in Kelvin bedeutet und Tg(2) die Glasübergangstemperatur in Kelvin bedeutet.

EP 2 813 530 A1

**Beschreibung**

Die Erfindung betrifft teilaromatische Copolyamide auf Basis von Terephthalsäure und Hexamethylendiamin, die Wiederholungseinheiten aufweisen, welche von Terephthalsäure und Hexamethylendiamin abgeleitet sind und die bessere Verarbeitungseigenschaft im Vergleich zu konventionellen Copolyamiden auf Basis von Terephthalsäure und Hexamethylendiamin aufweisen.

Teilaromatische Copolyamide auf Basis von Terephthalsäure und Hexamethylendiamin, insbesondere solche mit hohem Terephthalsäuregehalt, sind teilkristalline, thermoplastische Polymere und als moderne Werkstoffe in vielerlei Hinsicht von Interesse. Sie zeichnen sich insbesondere durch ihre hohe Temperaturbeständigkeit aus und gehören damit zur Gruppe der Hochtemperatur-Polyamide (HTPA).

Ein wichtiger Einsatzbereich der HTPA ist die Herstellung von Elektro- und Elektronikbauteilen, wobei insbesondere Polymere auf Basis von Polyphthalamid (PPA) sich für den Einsatz in Lötprozessen unter bleifreien Bedingungen (lead free soldering) eignen. HTPA dienen dabei unter Anderem zur Herstellung von Steckverbindern, Mikroschaltern und -tastern und Halbleiterbauteilen, wie Reflektorgehäusen von Leuchtdioden (LED). Ein weiterer wichtiger Einsatzbereich der HTPA sind Automobil-Anwendungen im Hochtemperaturbereich. Hier kommt es vor allem auf eine gute Wärmealterungsbeständigkeit, hohe Festigkeit und Zähigkeit und Schweißnahtfestigkeit der eingesetzten Polymere an. Amorphe HTPA oder solche mit sehr geringen kristallinen Anteilen sind transparent und eignen sich speziell für Anwendungen, bei denen Durchsichtigkeit vorteilhaft ist. Teilkristalline HTPA zeichnen sich im Allgemeinen durch verbesserte Chemikalienbeständigkeit, eine dauerhafte Beständigkeit bei hoher Umgebungstemperatur aus und eignen sich z. B. für Anwendungen im Motorraumbereich.

Polyamide für den Einsatz in Formmassen für Hochtemperaturanwendungen müssen ein komplexes Eigenschaftsprofil aufweisen, wobei gute mechanische Eigenschaften auch bei einer thermischen Langzeitbelastung mit einer guten Verarbeitbarkeit in Einklang gebracht werden muss. So verbessern beispielsweise hohe Anteile an Hexamethylendiamin/Terephthalsäure zwar die Kristallinität und erhöhen signifikant die Glasübergangstemperaturen, jedoch verschlechtert sich mit zunehmendem Gehalt dieser Monomereinheiten oftmals die Verarbeitbarkeit aufgrund der hohen Schmelztemperaturen. Reines Polyamid 6.T, d. h. ein aus Hexamethylendiamin (HMD) und Terephthalsäure (T) aufgebautes Polyamid, kann nicht ohne thermischen Abbau aus der Schmelze verarbeitet werden, da der Schmelzpunkt oberhalb der Zersetzungstemperatur des Polymers liegt ($T_m$ >> 340 °C). Durch die Verwendung zusätzlicher Comonomere (Diamine oder Disäuren) kann der Schmelzpunkt des Polyamids abgesenkt werden. Jedoch stören die Comonomere in der Regel die kristalline Ordnung und senken nicht nur den Schmelzpunkt, sondern reduzieren auch die Kristallinität im Polymer und verschlechtern damit dessen mechanische Eigenschaften, insbesondere bei höheren Temperaturen.

EP 310 752 A2 beschreibt kristalline Copolyamide auf Basis von Terephthalsäure, Isophthalsäure und Hexamethylendiamin, in denen das Molverhältnis von Terephthalsäure zu Isophthalsäure im Bereich von 81 : 19 bis 99 : 1 liegt. Die Copolyamide weisen jedoch eine hohe Schmelzviskosität auf.

Die EP 667 367 A2 beschreibt teilaromatische teilkristalline thermoplastische Copolyamide auf Basis von Terephthalsäure und Hexamethylendiamin, die Wiederholungseinheiten aufweisen, welche sich von Isophthalsäureamiden ableiten und geringe Anteile an einkondensierten cyclischen Diaminen enthalten. Die Copolyamide weisen eine hohe Kristallinität auf.

EP 735 082 beschreibt Polyamid-Zusammensetzungen, die 0,1 bis 2 Gew.-% Alkalimetallhalogenide enthalten und signifikant niedrigere Schmelzviskositäten aufweisen. Derartige Zusammensetzungen sind daher leichter in der Schmelze verarbeitbar. Der Halogengehalt ist jedoch für einige Anwendungen unerwünscht.

Die EP 1 245 640 beschreibt thermoplastische Polyamid-Formmassen mit gutem Fließverhalten und guter Wärmeformbeständigkeit aus Polyamid-Zusammensetzungen auf Basis von teilkristallinen, teilaromatischen Copolyamiden (A) mit einem Schmelzpunkt von mindestens 240 °C und amorphen (Co)Polyamiden (B), wobei es sich bei den Copolyamiden (A) um solche mit einem hohen Gehalt an Terephthalsäure und einem geringen Gehalt an Isophthalsäure und bei den amorphen (Co)polyamiden B um solche handelt, die als Säurekomponente überwiegend Isophthalsäure enthalten.

Es besteht weiter ein Bedarf an teilaromatischen Copolyamiden für Polyamid-Formmassen, die über ein verbessertes Eigenschaftsprofil bezüglich ihrer Verarbeitbarkeit und der erhaltenen mechanischen Eigenschaften bei hohen Temperaturen verfügen. Insbesondere sollte dies ohne oder mit geringerem Einsatz an Additiven erreicht werden.

Der vorliegenden Erfindung liegt die Aufgabe zu Grunde, teilaromatische Copolyamide mit verbesserten Eigenschaften zur Verfügung zu stellen. Diese sollen sich speziell zur Herstellung von Polyamid-Formmassen eignen, aus denen bevorzugt Bauteile für die Automobilindustrie sowie den Elektro-/Elektronikbereich hergestellt werden.

Es wurde überraschenderweise gefunden, dass teilaromatische Copolyamide auf Basis von Terephthalsäure und HMD mit einem hohen Terephthalsäuregehalt von wenigstens 68 Mol-%, bezogen auf die Säurekomponente, und einem hohen HMD-Gehalt, d. h. wenigstens 68 Mol-% Wiederholungseinheiten sind von Terephthalsäure und Hexamethylendiamin abgeleitet, die gleichzeitig ein möglichst großes Verhältnis von Glasübergangstemperatur Tg [in Kelvin]

zu Schmelztemperatur $T_m$ [in Kelvin] von $T_g/T_m$ [K/K] $\geq$ 0.71 aufweisen und gleichzeitig eine Schmelzenthalpie von wenigstens 40 J/g, insbesondere wenigsten 45 J/g aufweisen, vorteilhafte Verarbeitungseigenschaften, insbesondere eine erhöhte Fließfähigkeit besitzen und gleichzeitig gute mechanische Eigenschaften auch bei erhöhter Temperatur aufweisen. Man nimmt an, dass aufgrund des größeren Verhältnisses $T_g/T_m$ (also ein höherer Tg und ein niedrigerer $T_m$) ein Großteil der mechanischen Eigenschaften bei hohen Temperaturen erhalten bleibt und gleichzeitige bessere Verarbeitbarkeit der HTPA Schmelze durch eine Erhöhung der Fließfähigkeit (niedrigere Schmelzviskositäten) im Polymer erzielt wird.

Dementsprechend betrifft die vorliegende Erfindung teilaromatische Copolyamide PA auf Basis von Terephthalsäure und Hexamethylendiamin, die wenigstens 68 Mol-% Wiederholungseinheiten aufweisen, welche von Terephthalsäure und Hexamethylendiamin abgeleitet sind, die eine Schmelzenthalpie $\Delta H(2)$ von wenigstens 40 J/g, insbesondere wenigstens 45 J/g und ein Verhältnis von Tg(2) zu $T_m(2)$ von wenigstens 0,71, insbesondere wenigstens 0,72 und speziell wenigstens 0,73, aufweisen, wobei $T_m(2)$ die Schmelztemperatur in Kelvin bedeutet und Tg(2) die Glasübergangstemperatur in Kelvin bedeutet.

Schmelzenthalpie $\Delta H(2)$, Glasübergangstemperatur Tg(2) und Schmelztemperatur $T_m(2)$ werden mittels dynamischer Differenzkalorimetrie (DSC: Differential Scanning Calorimetrie) in an sich bekannter Weise bestimmt (DIN EN ISO 11357, Teile 1 und 3 bzw. nach ISO 11357-2:2013). Die DSC-Messung erfolgt an thermisch konditionierten Proben. Hierzu wird die DSC-Messung an ein- und derselben Probe zweckmäßigerweise ein- bis zweimal wiederholt. Nach dem ersten Aufheizen wird die Probe 5 Minuten in der Schmelze gehalten, um die thermische Vorgeschichte des Copolyamids zu löschen und somit eine definierte thermische Vorgeschichte des jeweiligen Copolyamids sicherzustellen (thermisch konditioniertes Copolyamid). Der Index (2) bei Schmelzenthalpie $\Delta H(2)$, Glasübergangstemperatur Tg(2) und Schmelztemperatur $T_m(2)$ bedeutet, dass die Auswertung anhand der zweiten Aufheizkurve (1. Wiederholung) vorgenommen wird.

Die Bestimmung der Schmelzenthalpie · H(2), Glasübergangstemperatur Tg(2) und Schmelztemperatur $T_m(2)$ erfolgt unter Stickstoff in offenen Aluminiumtiegeln bei einer Aufheizrate und Abkühlrate von 20 K/min. Messung und Auswertung erfolgt nach DIN EN ISO 11357-3 bzw. nach ISO 11357-2:2013.

Die Schmelztemperatur $T_m(2)$ ist das endotherme Peakmaximum der DSC Kurve beim zweiten Aufheizen nach definierter thermischer Vorgeschichte (s.o.). Zur Bestimmung der Schmelzenthalpie $\Delta H(2)$ wird an den endothermen Schmelzpeak eine Basislinie durch Verbinden der Peakanfangstemperatur mit der Peakendtemperatur angelegt. Die Schmelzenthalpie $\Delta H(2)$ erhält man indem man die Fläche zwischen der Basislinie und dem endothermen Schmelzpeak bestimmt. Die Glasübergangstemperatur Tg(2) wird nach ISO 11357-2:2013 bestimmt. Sie ist die Temperatur des Schnittpunktes der Mittellinie zwischen den extrapolierten Basislinien vor und nach dem Glasübergang mit der DSC Messkurve.

Ein weiterer Gegenstand der Erfindung sind Polyamid-Formmassen, die ein teilaromatisches Copolyamid, wie zuvor und im Folgenden definiert, enthalten.

Ein weiterer Gegenstand der Erfindung ist die Verwendung eines teilaromatischen Copolyamids zur Herstellung von Polyamid-Formmassen, die insbesondere zur Herstellung von Bauteilen für Automobil-Anwendungen im Hochtemperaturbereich sowie den Elektro-/Elektronikbereich dienen.

Gegenstand der Erfindung ist auch ein Verfahren zur Identifizierung teilaromatischer Copolyamide PA auf Basis von Terephthalsäure und Hexamethylendiamin, die wenigstens 68 Mol-% Wiederholungseinheiten aufweisen, welche von Terephthalsäure und Hexamethylendiamin abgeleitet sind und die gute mechanischen Eigenschaften bei erhöhter Temperatur und gleichzeitig eine verbesserte Verarbeitbarkeit, insbesondere bei thermoplastischen Formgebungsverfahren, aufweisen. Das Verfahren ist dadurch gekennzeichnet, dass man die Schmelzenthalpie $\Delta H(2)$, die Glasübergangstemperatur Tg(2) und die Schmelztemperatur $T_m(2)$ mittels DSC an einer Probe des Copolyamids mit definierter thermischer Vorgeschichte, d.h. einer thermisch konditionierten Probe des Copolyamids PA, bestimmt und ein Copolyamid auswählt, das eine Schmelzenthalpie $\Delta H(2)$ von wenigstens 40 J/g, insbesondere wenigstens 45 J/g und ein Verhältnis von Tg(2) zu $T_m(2)$ von wenigstens 0,71, insbesondere wenigstens 0,72 und speziell wenigstens 0,73, aufweisen.

Die erfindungsgemäßen teilaromatischen Copolyamide PA auf Basis von Terephthalsäure und Hexamethylendiamin werden typischerweise durch Cokondensation einer Säurekomponente S, die wenigstens 68 Mol-%, bezogen auf alle Monomere der Säurekomponente, Terephthalsäure (im Folgenden Komponente a)) und gegebenenfalls ein oder mehrere weitere Dicarbonsäuren oder amidbildende Derivate davon umfasst, mit einer Diaminkomponente D, die Hexamethylendiamin (im Folgenden Komponente d)) und gegebenenfalls ein oder mehrere weitere Diamine umfasst, wobei der Anteil an Hexamethylendiamin in der Regel wenigstens 70 Mol-%, bezogen auf die Gesamtmenge der Amine in der Aminkomponente umfasst. Bei der Herstellung kann auch eine Lactamkomponente L zugegen sein. Die Monomere der Säure- und der Diaminkomponente sowie der gegebenenfalls eingesetzten Lactamkomponente bilden durch die Kondensation Wiederholungseinheiten bzw. Endgruppen in Form von Amiden aus, die von den jeweiligen Monomeren abgeleitet sind. Diese machen in der Regel 95 Mol-%, insbesondere 99 Mol-% aller im Copolyamid vorliegenden Wiederholungseinheiten und Endgruppen aus. Daneben kann das Copolyamid auch geringe Mengen anderer Wiederholungseinheiten aufweisen, die aus Abbau- oder Nebenreaktionen der Monomere, beispielsweise der Diamine, resultieren können.

Das Molverhältnis der Säurekomponente S zur Aminkomponente D liegt vorzugsweise im Bereich von 0,9 : 1 bis 1,1 : 1 und insbesondere im Bereich von 0,99 : 1 bis 1 : 1,05 und speziell im Bereich von 1,01 : 1 bis 1,05 : 1.

Neben Terephthalsäure und Hexamethylendiamin enthalten bevorzugte Ausführungsformen erfindungsgemäßer Copolyamide Isophthalsäure (im Folgenden auch Komponente b)) einkondensiert. Der Anteil an Isophthalsäure in der Säurekomponente dieser bevorzugten Ausführungsformen macht in der Regel 2 bis 32, insbesondere 5 bis 30 Mol-% und speziell 10 bis 25 Mol-%, bezogen auf die Gesamtmenge aller Bestandteile der Säurekomponente, aus.

Die erfindungsgemäßen Copolymerisate enthalten neben Terephthalsäure, gegebenenfalls Isophthalsäure und Hexamethylendiamin, in der Regel wenigstens ein weiteres Comonomer einkondensiert, das von Terephthalsäure, Isophthalsäure und Hexamethylendiamin verschieden ist. Bei diesem Comonomer kann es sich sowohl um eine Dicarbonsäure als auch um ein Diamin oder um ein Lactam handeln.

Beispiele für geeignete Comonomere sind:

- Dicarbonsäuren der Formel HOOC-A-COOH (im Folgenden Komponente c)), worin A für einen aliphatischen oder alicyclischen Kohlenwasserstoffrest mit 6 bis 16 C-Atomen, insbesondere 6 bis 14 C-Atomen oder 6 bis 12 C-Atomen steht und insbesondere für lineares oder verzweigtes $C_6$-$C_{12}$-Alkandiyl bedeutet. Beispiele für derartige Dicarbonsäuren sind 1,8-Octandisäure (A = 1,6-Hexandiyl), 1,10-Decandisäure (A = 1,8-Octandiyl), 1,12-Dodecandisäure (A = 1,10-Decandiyl) und 1,14-Tetradecandisäure (A = 1,12-Dodecandiyl). Besonders bevorzugt umfasst die Dicarbonsäure der Formel HOOC-A-COOH 1,12-Dodecandisäure oder besteht aus 1,12-Dodecandisäure.
- Diamine der Formel $H_2N$-Q-$NH_2$, worin Q für einen gesättigten alicyclischen oder araliphatischen Kohlenwasserstoffrest mit 8 bis 18 C-Atomen steht (im Folgenden Komponente e)). Alicyclische Reste sind beispielsweise solche, die ein oder zwei Cyclohexandiylreste und gegebenenfalls eine oder zwei $C_1$-$C_3$-Alkandiyl-gruppen, z. B. Methylengruppen, aufweisen, wobei die Cyclohexanylreste unsubstituiert sind oder 1, 2, 3 oder 4 Methylgruppen aufweisen. Araliphatische Kohlenwasserstoffreste sind solche, die wenigstens einen aromatischen bivalenten Rest, beispielsweise einen Phenylenrest und wenigstens eine Alkandiylgruppe mit vorzugsweise 1 bis 3 C-Atomen aufweisen. Beispiele für derartige Diamine sind Isophorondiamin (IPDA; 3-Aminomethyl-3,5,5-trimethylcyclohexylamin), Bis-(3-methyl-4-aminocyclohexyl)methan (MACM), 4,4'-(Aminocyclohexyl)methan (PACM), m-Xylylendiamin und p-Xylylendiamin. Besonders bevorzugt umfasst das Diamin der Formel $H_2N$-Q-$NH_2$ Isophorondiamin oder besteht aus Isophorondiamin.
- Gesättigte, monocyclische Lactame mit 6 bis 16 C-Atomen, insbesondere 8 bis 14 C-Atomen (im Folgenden Komponente f)), z. B. Caprolactam, insbesondere ε-Caprolactam, Capryllactam, Önanthlactam, Laurinlactam und Mischungen davon. Besonders bevorzugt umfasst das monocyclische Lactam Laurinlactam oder besteht aus Laurinlactam.

Die erfindungsgemäßen teilaromatischen Copolyamide PA sind in der Regel unter solchen Copolyamiden ausgewählt, die in einkondensierter Form die folgenden Komponenten a) bis f) in den im Folgenden angegebenen Mengen enthalten, wobei

i. wenigstens eine der Komponenten c), e) und f) in dem Copolyamid PA in einkondensierter Form enthalten ist und die Gesamtmenge der Komponenten c), e) und f) im Bereich von 1 bis 30 Mol-%, insbesondere 2 bis 20 Mol liegt, wobei die Komponente c) auf die Bestandteile der Säurekomponente und die Komponenten e und f) auf die Bestandteile der Diaminkomponente bezogen sind;

ii. jeweils die Komponenten a), b) und c) sowie d) und e) zusammen 100 Mol-% ergeben und Komponente f) auf die Molzahl der Aminkomponente D bezogen ist;

iii. das Molverhältnis der Säurekomponente S zur Aminkomponente D im Bereich von 0,9 : 1 bis 1,1 : 1 und insbesondere im Bereich von 0,99 : 1 bis 1 : 1,05 und speziell im Bereich von 1,01 : 1 bis 1,05 : 1 liegt.

Derartige teilaromatische Copolyamide PA enthalten in der Regel:

als Säurekomponente S:

a) 68 bis 100 Mol-%, häufig 68 bis 98 Mol-%, insbesondere 70 bis 95 Mol-% und speziell 75 bis 90 Mol-% Terephthalsäure,

b) 0 bis 32 Mol-% Isophthalsäure, häufig 2 bis 32 Mol-%, insbesondere 5 bis 30 Mol-% und speziell 10 bis 25 Mol-%, und

c) 0 bis 10 Mol-% einer oder mehrerer Dicarbonsäuren der Formel HOOC-A-COOH, wie vorstehend definiert, wobei die für die Komponenten a), b) und c) angegebenen Molzahlen zusammen 100 Mol-% ergeben;

als Diaminkomponente D:

d) 70 bis 100 Mol-% Hexamethylendiamin,
e) 0 bis 30 Mol-% eines oder mehrerer Diamine der Formel $H_2N-Q-NH_2$, wie vorstehend definiert,
wobei die für die Komponenten d) und e) angegebenen Molzahlen zusammen 100 Mol-% ergeben;

und als Lactamkomponente L:

f) 0 bis 10 Mol-% eines oder mehrerer gesättigter, monocyclischer Lactame mit 6 bis 16 C-Atomen wie vorstehend definiert.

Gemäß einer ersten bevorzugten Ausführungsform bestehen die Copolyamide PA aus Wiederholungseinheiten der Komponenten a), b), d) und e), insbesondere in den folgenden angegebenen Mengen:

a) 68 bis 95 Mol-%, insbesondere 70 bis 95 Mol-% und speziell 75 bis 90 Mol-% Terephthalsäure,
b) 5 bis 32 Mol-%, insbesondere 5 bis 30 Mol-% und speziell 10 bis 25 Mol-% Isophthalsäure,
d) 80 bis 98 Mol-%, insbesondere 85 bis 95 Mol-% Hexamethylendiamin,
e) 2 bis 20 Mol-%, z.B. 5 bis < 15 Mol-% oder 15 bis 20 Mol-% eines oder mehrerer Diamine der Formel $H_2N-Q-NH_2$, wie vorstehend definiert, das vorzugsweise ausgewählt ist unter Isophorondiamin (IPDA; 3-Aminomethyl-3,5,5-trimethylcyclohexylamin), Bis-(3-methyl-4-aminocyclohexyl)methan (MACM), 4,4'-(Aminocyclohexyl)methan (PACM), m-Xylylendiamin und p-Xylylendiamin sowie deren Gemischen und besonders bevorzugt Isophorondiamin umfasst oder aus Isophorondiamin besteht;
wobei jeweils die Komponenten a) und b) sowie d) und e) zusammen 100 Mol-% ergeben und das Molverhältnis der Säurekomponente S, d. h. die Gesamtmenge der Komponenten a) und b), zur Aminkomponente D, d. h. die Gesamtmenge der Komponenten d) und e), im Bereich von 0,9 : 1 bis 1,1 : 1 und insbesondere im Bereich von 0,99 : 1 bis 1 : 1,05 und speziell im Bereich von 1,01 : 1 bis 1,05 : 1 liegt.

Gemäß einer zweiten bevorzugten Ausführungsform bestehen die Copolyamide PA aus Wiederholungseinheiten der Komponenten a), b), c), d) und gegebenenfalls e), insbesondere in den folgenden angegebenen Mengen:

a) 68 bis 98 Mol-%, insbesondere 70 bis 95 Mol-% und speziell 75 bis 90 Mol-% Terephthalsäure,
b) 1 bis 31 Mol-%, insbesondere 3 bis 28 Mol-% und speziell 8 bis 23 Mol-% Isophthalsäure,
c) 1 bis 10 Mol-%, insbesondere 2 bis 8 Mol-% und speziell 2 bis 5 Mol-% einer oder mehrerer Dicarbonsäuren der Formel HOOC-A-COOH, wie vorstehend definiert, die vorzugsweise unter 1,8-Octandisäure, 1,10-Dodecandisäure, 1,12-Dodecandisäure, 1,14-Tetradecandisäure und deren Gemischen ausgewählt ist und die insbesondere 1,12-Dodecandisäure umfasst oder daraus besteht,
d) 90 bis 100 Mol-% oder 90 bis 99 Mol-% Hexamethylendiamin,
e) 0 bis 10 Mol-% oder 1 bis 10 Mol-% eines oder mehrerer Diamine der Formel $H_2N-Q-NH_2$, wie vorstehend definiert, das vorzugsweise ausgewählt ist unter Isophorondiamin (IPDA; 3-Aminomethyl-3,5,5-trimethylcyclohexylamin), Bis-(3-methyl-4-aminocyclohexyl)methan (MACM), 4,4'-(Aminocyclohexyl)methan (PACM), m-Xylylendiamin und p-Xylylendiamin sowie deren Gemischen und besonders bevorzugt Isophorondiamin umfasst oder aus Isophorondiamin besteht;
wobei jeweils die Komponenten a), b) und c) sowie d) und e) zusammen 100 Mol-% ergeben und das Molverhältnis der Säurekomponente S, d. h. die Gesamtmenge der Komponenten a) und b), zur Aminkomponente D, d. h. die Gesamtmenge der Komponenten d) und e), im Bereich von 0,9 : 1 bis 1,1 : 1 und insbesondere im Bereich von 0,99 : 1 bis 1 : 1,05 und speziell im Bereich von 1,01 : 1 bis 1,05 : 1 liegt.

Gemäß einer zweiten bevorzugten Ausführungsform bestehen die Copolyamide PA aus Wiederholungseinheiten der Komponenten a), b), c), d) und gegebenenfalls e), insbesondere in den folgenden angegebenen Mengen:

a) 68 bis 95 Mol-%, insbesondere 70 bis 95 Mol-% und speziell 75 bis 90 Mol-% Terephthalsäure,
b) 5 bis 32 Mol-%, insbesondere 5 bis 30 Mol-% und speziell 10 bis 25 Mol-% Isophthalsäure,
d) 90 bis 100 Mol-%, oder 90 bis 99 Mol-% Hexamethylendiamin,
e) 0 bis 10 Mol-% oder 1 bis 10 Mol-% eines oder mehrerer Diamine der Formel $H_2N-Q-NH_2$, wie vorstehend definiert, das vorzugsweise ausgewählt ist unter Isophorondiamin (IPDA; 3-Aminomethyl-3,5,5-trimethylcyclohexylamin), Bis-(3-methyl-4-aminocyclohexyl)methan (MACM), 4,4'-(Aminocyclohexyl)methan (PACM), m-Xylylendiamin und p-Xylylendiamin sowie deren Gemischen und besonders bevorzugt Isophorondiamin umfasst oder aus Isophorondiamin besteht und

f) 1 bis 10 Mol-%, wenigstens eines gesättigten, monocyclischen Lactams mit 6 bis 16 C-Atomen, insbesondere 8 bis 14 C-Atomen wie vorstehend definiert, das vorzugsweise unter Caprolactam, insbesondere ε-Caprolactam, Capryllactam, Önanthlactam, Laurinlactam und Mischungen davon ausgewählt ist und insbesondere Laurinlactam umfasst oder aus Laurinlactam besteht;

wobei jeweils die Komponenten a) und b) sowie d) und e) zusammen 100 Mol-% ergeben und Komponente f) auf die Molzahl der Aminkomponente D bezogen ist und das Molverhältnis der Säurekomponente S, d. h. die Gesamtmenge der Komponenten a) und b), zur Aminkomponente D, d. h. die Gesamtmenge der Komponenten d) und e), im Bereich von 0,9 : 1 bis 1,1 : 1 und insbesondere im Bereich von 0,99 : 1 bis 1 : 1,05 und speziell im Bereich von 1,01 : 1 bis 1,05 : 1 liegt.

Die erfindungsgemäßen Copolyamide weisen vorzugsweise eine Glasübergangstemperatur Tg(2) von wenigstens 400 K, bevorzugt von wenigstens 410 K, insbesondere von wenigstens 415 K, auf und wird in der Regel 450 K nicht überschreiten.

Die erfindungsgemäßen Copolyamide weisen vorzugsweise eine Schmelztemperatur $T_m(2)$ im Bereich von 560 bis 600 K, insbesondere im Bereich von 570 bis 585 K auf.

Die erfindungsgemäßen Copolyamide weisen vorzugsweise eine Schmelzwärme $\Delta H(2)$ von wenigstes 40 J/g, insbesondere wenigstens 45 J/g und speziell wenigstens 50 J/g auf. Bevorzugt liegt die Schmelzwärme $\Delta H(2)$ oberhalb von 50 J/g, z.B. im Bereich von 50 bis 80 J/g.

Die erfindungsgemäßen Copolyamide weisen vorzugsweise einen Aminendgruppengehalt (AEG) von 50 bis 100 mol/g auf.

Die erfindungsgemäßen Copolyamide weisen vorzugsweise eine Viskositätszahl von 80 bis 120 ml/g auf. Die Viskositätszahl (Staudinger-Funktion, bezeichnet mit VZ, VN oder J) ist definiert als $VZ = 1 / c \times (\eta - \eta_s) / \eta_s$. Die Viskositätszahl steht in direkter Beziehung zur mittleren molaren Masse des Copolyamids und gibt Auskunft über die Verarbeitbarkeit eines Kunststoffes. Die Bestimmung der Viskositätszahl kann nach EN ISO 307 mit einem Ubbelohde-Viskosimeter erfolgen.

Die erfindungsgemäßen Copolyamide weisen vorzugsweise ein zahlenmittleres Molekulargewicht $M_n$ in einem Bereich von 13000 bis 25000 g/mol, besonders bevorzugt von 15000 bis 20000 g/mol, auf.

Das erfindungsgemäße Copolyamid weist vorzugsweise ein gewichtsmittleres Molekulargewicht $M_w$ in einem Bereich von 25000 bis 125000 g/mol auf.

Die Angaben des zahlenmittleren Molekulargewichts $M_n$ und des gewichtsmittleren Molekulargewichts $M_w$ im Rahmen dieser Erfindung beziehen sich auf eine Bestimmung mittels Gelpermeationschromatographie (GPC). Zur Kalibrierung wird PMMA als Polymerstandard mit einer niedrigen Polydispersität eingesetzt.

Die erfindungsgemäßen Copolyamide weisen vorzugsweise eine Polydispersität PD (= $M_w/M_n$) von höchstens 6, insbesondere von höchstens 5 und besonders bevorzugt von höchstens 3,5, auf.

Die erfindungsgemäßen teilaromatischen Copolyamide können grundsätzlich nach üblichen, dem Fachmann bekannten Verfahren hergestellt werden. Die Herstellung von teilaromatischen Polyamiden beginnt in der Regel mit der Bildung einer wässrigen Salzlösung aus wenigstens einem Diamin und wenigstens einer Dicarbonsäure. An die Bildung der Salzlösung schließt sich dann eine Oligomerisierung in der flüssigen wässrigen Phase an. Für den angestrebten Molekulargewichtsaufbau muss dann im Verlauf des weiteren Verfahrens Wasser entfernt und die Reaktionstemperatur erhöht werden. Zum weiteren Molekulargewichtsaufbau stehen prinzipiell zwei alternative Routen zur Verfügung. In der ersten Variante wird das gebildete Oligomer durch Entwässerung in die feste Phase überführt und einer sogenannten Festphasenpolymerisation (solid state polymerization, SSP) unterzogen. In der zweiten Variante erfolgt unter kontrollierter Wasserabtrennung und Temperaturerhöhung eine Überführung der wässrigen Lösung in die Schmelze zur weiteren Polykondensation. Zum weiteren Molekulargewichtsaufbau kann sich dann, soweit erforderlich, noch eine Nachpolymerisation, z. B. in einem Extruder, anschließen.

In der Folge sollen einige der möglichen Verfahren anhand der im Folgenden angegebenen Dokumente beschrieben werden, die in analoger Weise zur Herstellung der erfindungsgemäßen teilaromatischen Copolyamide angewendet werden können und deren Inhalt vollständig in den Offenbarungsgehalt der vorliegenden Anmeldung eingeschlossen wird.

Ein geeignetes Verfahren ist z. B. in der EP 0 693 515 A1 beschrieben. Dabei erfolgt die Herstellung von Vorkondensaten teilaromatischer Polyamide in einem mehrstufigen Chargenprozess, der die folgenden Stufen a) bis e) umfasst:

a) eine Salzbildungsphase zur Herstellung von Salz(en) aus Diamin(en) und Dicarbonsäure(n) und gegebenenfalls partielle Vorreaktion zu niedermolekularen Oligoamiden bei Temperaturen zwischen 120 °C und 220 °C und Drücken von bis zu 23 bar,

b) gegebenenfalls die Überführung der Lösung aus Stufe a) in ein zweites Reaktionsgefäß bzw. einen Rührautoklaven unter den am Ende ihrer Herstellung herrschenden Bedingungen,

c) die Reaktionsphase, während der die Umsetzung zu den Vorkondensaten vorangetrieben wird, durch Aufheizen des Reaktorinhaltes auf eine vorgegebene Temperatur und kontrolliertes Einstellen des Wasserdampfpartialdruckes auf einen vorgegebenen Wert, der durch kontrolliertes Ablassen von Wasserdampf oder gegebenenfalls kontrollierte Einspeisung von Wasserdampf aus einem mit dem Autoklaven verbundenen Wasserdampferzeuger aufrechterhalten wird,

d) eine für mindestens 10 Minuten aufrechtzuerhaltende stationäre Phase, bei der die Temperatur des Reaktorinhalts und der Wasserdampfpartialdruck jeweils auf die Werte eingestellt werden, welche für die Überführung der Vorkondensate in die nachfolgende Prozess-Stufe vorgesehen sind,
wobei im Falle von Vorkondensaten teilkristalliner (Co-)Polyamide mit einem Schmelzpunkt von mehr als 280 °C die Temperatur des Reaktorinhalts während der Phasen c) und d) 265 °C nicht überschreiten darf und für die besagten teilkristallinen (Co-)Polyamide während der Phasen c) und d) bestimmte genauer definierte Randbedingungen in Bezug auf die Abhängigkeit des mindestens anzuwendenden Wasserdampfpartialdruckes $P_{H2O}$ (minimum) von der Temperatur des Reaktorinhalts und der Amidgruppenkonzentration des Polymeren einzuhalten sind, und

e) eine Austragsphase, während der die Vorkondensate entweder direkt im schmelzflüssigen Zustand oder nach Durchlaufen des festen Zustandes und gegebenenfalls weiterer Verfahrensstufen einer Endreaktionsvorrichtung zugeführt werden können.

Die EP 0 976 774 A2 beschreibt ein Verfahren zur Herstellung von Polyamiden, umfassend die folgenden Schritte:

i) Polykondensation einer Dicarbonsäurekomponente, die Terephthalsäure enthält, und einer Diaminkomponente in Gegenwart 15 bis 35 Gew.-% Wasser bei einer Reaktionstemperatur von 250 bis 280 °C und einem Reaktionsdruck, der folgende Gleichung erfüllt:

$$P_0 \geq \ P \geq \ 0{,}7\,P_0$$

wobei Po für den Sättigungsdampfdruck von Wasser bei der Reaktionstemperatur steht,
unter Erhalt eines primären Polykondensats,

(ii) Austragen des primären Polykondensats aus Schritt i) in einer atmosphärischen Umgebung mit demselben Temperaturbereich und bei demselben Wassergehalt wie in Schritt i),

(iii) Molekulargewichtsaufbau, indem man den Austrag aus Schritt ii) einer Festphasenpolymerisation oder einer Schmelzepolymerisation unterzieht.

Die EP 0 129 195 A1 beschreibt ein Verfahren zur kontinuierlichen Herstellung von Polyamiden, bei dem man in einer Verdampferzone eine wässrige Lösung von Salzen aus Dicarbonsäuren und Diaminen unter erhöhtem Druck unter gleichzeitiger Verdampfung von Wasser und Bildung eines Präpolymeren auf eine Temperatur von 250 bis 300 °C erhitzt, Präpolymer und Dampf kontinuierlich trennt, die Dämpfe rektifiziert und mitgeführte Diamine zurückleitet, das Präpolymere in eine Polykondensationszone leitet und unter einem Überdruck von 1 bis 10 bar bei einer Temperatur von 250 bis 300 °C kondensiert, wobei man die wässrige Salzlösung unter einem Überdruck von 1 bis 10 bar innerhalb einer Verweilzeit von höchstens 60 Sekunden erhitzt mit der Maßgabe, dass bei Austritt aus der Verdampferzone der Umsetzungsgrad mindestens 93 % beträgt und der Wassergehalt des Präpolymeren höchstens 7 Gew.-% beträgt. Die EP 0 129 196 A1 beschreibt ein zur EP 0 129 195 A1 vergleichbares Verfahren, bei dem man die wässrige Salzlösung im ersten Drittel einer rohrförmigen, mit Einbauten versehenen Vorkondensationszone unter einem Überdruck von 1 bis 10 bar bis zu einem Umsetzungsgrad von mindestens 93 % kondensiert und in den restlichen zwei Dritteln der Vorkondensationszone das Präpolymere und die Dampfphase intensiv miteinander in Berührung bringt.
Die WO 02/28941 beschreibt ein kontinuierliches Verfahren zur hydrolytischen Polymerisation von Polyamiden, umfassend:

a) Polymerisation einer wässrigen Salzlösung aus Disäuren und Diaminen unter Temperatur- und Druckbedingungen, die geeignet sind ein mehrphasiges Reaktionsgemisch zu bilden, wobei die Reaktionszeit jedoch so gewählt wird, dass eine Phasentrennung vermieden wird,

b) Wärmeeintrag in das Reaktionsgemisch bei gleichzeitiger Druckverringerung um Wasser zu entfernen ohne dass es zu einer Feststoffbildung kommt,

c) weitere Polymerisation des entwässerten Reaktionsgemischs bis zum angestrebten Molekulargewicht.

Die US 4,019,866 beschreibt ein Verfahren und eine Vorrichtung zur kontinuierlichen Polyamidherstellung. Nach dem Verfahren werden die Polyamid bildenden Reaktanten kontinuierlich in eine Reaktionszone eingepumpt, die so ausgelegt ist, dass ein rasches Erhitzen und gleichmäßiges Durchmischen ermöglicht sind. Die Reaktanten werden erhitzt und innerhalb der Reaktionszone für eine vorher bestimmte Haltezeit bei einer erhöhten Temperatur und einem erhöhten Druck gleichmäßig vermischt und so ein Dampf und ein Präpolymer gebildet. Der gebildete Dampf wird kontinuierlich von den Präpolymeren abgetrennt und die Präpolymere aus der Reaktionszone abgezogen. Die eingesetzte Vorrichtung ist kolonnenartig ausgestaltet und umfasst eine Rektifizierzone, eine erste und eine zweite Reaktionszone. In der ersten Reaktionszone wird eine Polyamid-bildende Salzlösung teilweise verdampft und teilweise umgesetzt und in der zweiten Reaktionszone die Reaktion bei einem niedrigeren Druck als in der ersten Reaktionszone fortgeführt. Der Dampf aus der ersten Reaktionszone wird durch die Rektifizierzone abgelassen.

Die EP 0 123 377 A2 beschreibt ein Kondensationsverfahren, das unter Anderem zur Herstellung von Polyamiden dient. Danach wird eine Salzlösung oder ein Präpolymer in einem Verdampfungsreaktor bei einem relativen Druck (Überdruck) von 0 bis 27,6 bar entspannt. Die Verweilzeit im Verdampfungsreaktor beträgt 0,1 bis 20 Sekunden. In einer speziellen Ausführung erfolgt zunächst eine Präpolymerisation bei einer Temperatur von 191 bis 232 °C und einem Lösungsmittelgehalt (Wassergehalt) von weniger als 25 Gew.-%. Die resultierende Salzlösung wird dann auf einen relativen Druck von 103,4 bis 206,8 bar gebracht, erst dann wird die Temperatur auf einen Wert oberhalb der Schmelztemperatur erhöht und die Lösung entspannt. Das Polymer kann in einen Doppelschneckenextruder eingespeist und dort einer Polymerisation bei einer Verweilzeit von etwa 45 Sekunden bis 7 Minuten unterzogen werden.

Die DE 4329676 A1 beschreibt ein Verfahren zur kontinuierlichen Polykondensation von hochmolekularen, insbesondere amorphen, teilaromatischen Copolyamiden, wobei zunächst aus einer wässrigen Reaktionsmischung unter Erwärmen und bei mindestens 15 bar Druck ein Vorkondensat hergestellt wird, nachfolgend unter Erhöhung von Temperatur und Druck ein Präpolymer und schließlich durch Kondensation in einem Entgasungsextruder das Copolyamid hergestellt wird. Dabei wird bereits in der Vorkondensationsstufe der Wassergehalt verringert und beträgt am Ende der Vorkondensation etwa 5 bis 40 Gew.-%. Die Herstellung des Präpolymers erfolgt dann bei 220 bis 350 °C und einem Druck von mindestens 20 bar. Die Nachpolymerisation wird dann in einem Doppelschneckenextruder mit Entgasungszonen durchgeführt.

Zur Herstellung der erfindungsgemäßen Copolyamide kann wenigstens ein Katalysator eingesetzt werden. Geeignete Katalysatoren sind vorzugsweise ausgewählt unter anorganischen und/oder organischen Phosphor-, Zinnoder Bleiverbindungen und deren Mischungen.

Als Katalysatoren geeignete Zinnverbindungen sind z. B. Zinn(II)-oxid, Zinn(II)-hydroxid, Zinn(II)-Salze, einoder mehrwertiger Carbonsäuren, z. B. Zinn(II)-dibenzoat, Zinn(II)-di(2-ethylhexanoat), Zinn(II)-oxalat, Dibutylzinnoxid, Butylzinnsäure($C_4H_9$-SnOOH), Dibutyl-Zinn-dilaurat, etc. Geeignete Bleiverbindungen sind z. B. Blei(II)-oxid, Blei(II)-hydroxid, Blei(II)-acetat, basisches Blei(II)-acetat, Blei(II)-carbonat, etc.

Bevorzugte Katalysatoren sind Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie z. B. Na, K, Mg, Ca, Zn oder Al und/oder deren Ester wie z. B. Triphenylphosphat, Triphenylphosphit oder Tris-(nonylphenyl)-phosphit. Besonders bevorzugt als Katalysator sind hypophosphorige Säure und deren Salze wie Natriumhypophosphit.

Bevorzugt werden die Katalysatoren in einer Menge von 0,005 bis 2,5 Gewichtsprozent, bezogen auf das Gesamtgewicht der Komponenten a) bis f), eingesetzt.

Besonders bevorzugt werden hypophosphorige Säure und/oder ein Salz der hypophosphorigen Säure in einer Menge von 50 bis 1000 ppm, besonders bevorzugt von 100 bis 500 ppm, bezogen die Gesamtmenge der zur Polyamidbildung geeigneten Komponenten (= Komponenten a) bis f)) eingesetzt.

Zur Regelung der Molmasse kann wenigstens ein Kettenregler eingesetzt werden, der vorzugsweise ausgewählt ist unter Monocarbonsäuren und Monoaminen. Bevorzugt ist der Kettenregler ausgewählt unter Essigsäure, Propionsäure, Buttersäure, Valeriansäure, Capronsäure, Laurinsäure, Stearinsäure, 2-Ethylhexansäure, Cyclohexansäure, Benzoesäure, 3-(3,5-di-tert-butyl-4-hydroxyphenyl)propansäure, 3,5-di-tert-butyl-4-hydroxybenzoesäure, 3-(3-tert-butyl-4-hydroxy-5-methylphenyl)propansäure, 2-(3,5-di-tert-butyl-4-hydroxybenzylthio)essigsäure, 3,3-bis(3-tert-butyl-4-hydroxyphenyl)-butansäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)propylamin, Methylcyclohexylamin, Dimethylcyclohexylamin, Benzylamin, 2-Phenylethylamin, 2,2,6,6-tetramethylpiperidin-4-amin, 1,2,2,6,6-Pentamethylpiperidin-4-amin, 4-Amino-2,6-di-tert-butylphenol und Mischungen davon. Es können auch andere monofunktionelle Verbindungen als Regler eingesetzt werden, die mit einer Amino- oder Säuregruppe reagieren können, wie Anhydride, Isocyanate, Säurehalogenide oder Ester. Der Kettenregler kann dem Reaktionsgemisch vor oder zu Beginn der Oligomerisierung und/oder dem Präpolymer vor der Nachpolymerisation zugesetzt werden. Die übliche Einsatzmenge der Kettenregler liegt in einem Bereich von 5 bis 500 mmol pro kg zur Polyamidbildung eingesetzter Komponenten, vorzugsweise 10 bis 200 mmol pro kg zur Polyamidbildung eingesetzter Komponenten.

In einer speziellen Ausführungsform wird zur Herstellung der erfindungsgemäßen Copolyamide eine wässrige Zusammensetzung aus Terephthalsäure a), Hexamethylendiamin d) sowie der gegebenenfalls eingesetzten, weiteren Polyamid-bildenden Komponenten (d. h. b), c), e) und f)) bereitgestellt und einer Salzbildung unterzogen. Gewünschtenfalls können dieser Lösung weitere Komponenten, wie Katalysatoren, Kettenregler und davon verschiedene Additive zugesetzt werden. Geeignete Additive werden im Folgenden bei den Polyamid-Formmassen ausführlich beschrieben. Zu den Additiven, die auch bereits bei der Herstellung der erfindungsgemäßen Polyamide zugesetzt werden können, zählen z. B. Antioxidantien, Lichtschutzmittel, übliche Verarbeitungshilfsmittel, Nukleierungsmittel und Kristallisationsbeschleuniger. Diese können den erfindungsgemäßen Polyamiden im Allgemeinen in jeder Stufe der Herstellung zugesetzt werden. Es ist auch möglich, bereits bei der Herstellung der erfindungsgemäßen Polyamide Füll- und Verstärkungsstoffe einzusetzen. Füll- und Verstärkungsstoffe werden vorzugsweise vor und/oder während der abschließenden Nachpolymerisation zugegeben. So können diese z. B. den erfindungsgemäßen Copolyamiden bei der Nachpolymerisation in einem Extruder oder Kneter zugegeben werden. In diesem Fall ist es vorteilhaft, wenn der Extruder geeignete Mischelemente, wie Knetblöcke, aufweist.

Diese zur Herstellung der erfindungsgemäßen Copolyamide bereitgestellte Zusammensetzung weist vorzugsweise einen Wassergehalt von 20 bis 55 Gew.-%, besonders bevorzugt von 25 bis 50 Gew.-%, bezogen auf das Gesamtgewicht der Lösung, auf.

Die Herstellung der wässrigen Zusammensetzung kann in einer üblichen Reaktionsvorrichtung, z. B. einem Rührkessel, erfolgen. Vorzugsweise erfolgt das Vermischen der Komponenten unter Erwärmung. Bevorzugt erfolgt die Herstellung der wässrigen Zusammensetzung unter Bedingungen, bei denen im Wesentlichen noch keine Oligomerisierung erfolgt. Bevorzugt liegt die Temperatur bei der Herstellung der wässrigen Zusammensetzung in Schritt a) in einem Bereich von 80 bis 170 °C, besonders bevorzugt von 100 bis 165 °C. Bevorzugt erfolgt die Herstellung der wässrigen Zusammensetzung bei Umgebungsdruck oder unter erhöhtem Druck. Bevorzugt liegt der Druck in einem Bereich von 0,9 bis 50 bar, besonders bevorzugt von 1 bis 10 bar. In einer speziellen Ausführung erfolgt die Herstellung der wässrigen Zusammensetzung beim Eigendruck der Reaktionsmischung. Die Herstellung der wässrigen Zusammensetzung kann in einer Inertgasatmosphäre erfolgen. Geeignete Inertgase sind z. B. Stickstoff, Helium oder Argon. In vielen Fällen ist eine vollständige Inertisierung nicht erforderlich, sondern bereits ein Spülen der Reaktionsvorrichtung mit einem Inertgas vor der Erwärmung der Komponenten ausreichend. In einer geeigneten Vorgehensweise zur Herstellung der wässrigen Zusammensetzung, wird die Diamin-Komponente in wenigstens einem Teil des Wassers gelöst in der Reaktionsvorrichtung vorgelegt. Anschließend werden die übrigen Komponenten, vorzugsweise unter Rühren, zugegeben und der Wassergehalt auf die gewünschte Menge eingestellt. Die Reaktionsmischung wird unter Rühren erwärmt, bis eine klare homogene Lösung entstanden ist. Die so erhaltene wässrige Zusammensetzung wird vorzugsweise im Wesentlichen bei der Herstellungstemperatur, d. h. ohne eine Zwischenkühlung, zur Oligomerisierung eingesetzt.

Die Oligomerisierung unter Bildung von Präpolymeren und die Nachpolymerisation zum Molekulargewichtsaufbau kann nach üblichen, dem Fachmann bekannten Verfahren erfolgen. Einige Beispiele für solche Verfahren wurden weiter oben bereits erwähnt.

Die bei der Herstellung der erfindungsgemäßen teilaromatischen Copolyamide anfallenden Polykondensate können vor ihrer Verarbeitung zu Polyamid-Formmassen zerkleinert werden, beispielsweise zu Granulaten. Beispielsweise kann das bei der Polykondensation anfallende Copolyamid zuerst zu einem oder mehreren Strängen geformt und anschließend einer Granulierung unterworfen werden. Dazu können dem Fachmann bekannte Vorrichtungen verwendet werden, z. B. Extruder, die austragsseitig z. B. Lochplatten, Düsen oder Düsenplatten aufweisen. Bevorzugt wird das bei der Polykondensation anfallende teilaromatische Copolyamid in fließfähigem Zustand zu Strängen geformt und als fließfähiges strangförmiges Reaktionsprodukt oder nach Abkühlung einer Granulierung unterzogen.

Ein weiterer Gegenstand der Erfindung ist eine Polyamid-Formmasse, die wenigstens ein erfindungsgemäßes teilaromatisches Copolyamid enthält.

Bevorzugt ist eine Polyamid-Formmasse, enthaltend:

A) 25 bis 100 Gew.-% wenigstens eines teilaromatischen Copolyamids, wie zuvor definiert,
B) 0 bis 75 Gew.-% wenigstens eines Füll- und Verstärkungsstoffs,
C) 0 bis 50 Gew.-% wenigstens eines Additivs,

wobei die Komponenten A) bis C) zusammen 100 Gew.-% ergeben.

Der Begriff "Füllstoff und Verstärkungsstoff" (= Komponente B) wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren (carbon nanotubes), carbon black, nanoskalige Schichtsilikate, nanoskaliges Aluminiumoxid ($Al_2O_3$), nanoskaliges Titandioxid ($TiO_2$), Graphen, dauerhaft magnetische bzw. magnetisierbare Metallverbindungen und/oder Legierungen, Schichtsilikate und nanoskaliges Siliciumdioxid ($SiO_2$), eingesetzt werden. Die Füllstoffe können auch oberflächenbehandelt sein.

Als Schichtsilikate können in den erfindungsgemäßen Formmassen z. B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt oder unbehandelt sein.

Weiterhin können ein oder mehrere Faserstoffe zum Einsatz kommen. Diese sind vorzugsweise ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, Kohlenstofffasern, Aramidfasern, Borfasern, Metallfasern oder Kaliumtitanatfasern.

Speziell werden Schnittglasfasern eingesetzt. Insbesondere umfasst die Komponente B) Glas- und/oder Kohlenstofffasern, wobei bevorzugt Kurzfasern eingesetzt werden. Diese weisen vorzugsweise eine Länge im Bereich von 2 bis 50 mm und einem Durchmesser von 5 bis 40 μm auf. Alternativ können Endlosfasern (Rovings) eingesetzt werden. Geeignet sind Fasern mit kreisförmiger und/oder nicht-kreisförmiger Querschnittsfläche, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

In einer speziellen Ausführung umfasst die Komponente B) sogenannte "flache Glasfasern". Diese weisen speziell eine ovale oder elliptische oder eine mit Einschnürung(en) versehene elliptische (sog. "Kokon"-oder "cocoon"-Faser) oder rechteckige oder nahezu rechteckige Querschnittsfläche auf. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt.

Zur Verstärkung der erfindungsgemäßen Formmassen können auch Mischungen von Glasfasern mit kreisförmigem und nicht-kreisförmigem Querschnitt verwendet werden. In einer speziellen Ausführung überwiegt der Anteil an flachen Glasfasern, wie oben definiert, d. h. sie machen mehr als 50 Gew.-% der Gesamtmasse der Fasern aus.

Wenn als Komponente B) Rovings von Glasfasern eingesetzt werden, weisen diese vorzugsweise einen Durchmesser von 10 bis 20 μm, bevorzugt von 12 bis 18 μm, auf. Dabei kann der Querschnitt der Glasfasern rund, oval, elliptisch, nahezu rechteckig oder rechteckig sein. Besonders bevorzugt werden sogenannte flache Glasfasern mit einem Verhältnis der Querschnittsachsen von 2 bis 5. Insbesondere werden E-Glasfasern verwendet. Es können aber auch alle anderen Glasfasersorten, wie z. B. A-, C-, D-, M-, S-, R-Glasfasern oder beliebige Mischungen davon oder Mischungen mit E-Glasfasern eingesetzt werden.

Die erfindungsgemäßen Polyamid-Formmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm, aufweist, kann mit den üblichen Verarbeitungsverfahren, wie z. B. Spritzgießen oder Pressen, zu Formteilen weiterverarbeitet werden.

Die erfindungsgemäße Polyamid-Formmasse enthält bevorzugt 25 bis 75 Gew.-%, besonders bevorzugt 33 bis 60 Gew.-%, mindestens eines Füll- und Verstärkungsstoffs B), bezogen auf das Gesamtgewicht der Polyamid-Formmasse.

Geeignete Additive C) sind Wärmestabilisatoren (Flammschutzmittel), Lichtschutzmittel (UV-Stabilisatoren, UV-Absorber oder UV-Blocker), Gleitmittel, Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer, etc.

Als Komponente C) enthalten die erfindungsgemäßen Formmassen vorzugsweise 0,01 bis 3 Gew.-%, besonders bevorzugt 0,02 bis 2 Gew.-%, insbesondere 0,1 bis 1,5 Gew.-% mindestens eines Wärmestabilisators.

Bevorzugt sind die Wärmestabilisatoren ausgewählt unter Kupferverbindungen, sekundären aromatischen Aminen, sterisch gehinderten Phenolen, Phosphiten, Phosphoniten und Mischungen davon.

Sofern eine Kupferverbindung verwendet wird, beträgt vorzugsweise die Menge an Kupfer 0,003 bis 0,5, insbesondere 0,005 bis 0,3 und besonders bevorzugt 0,01 bis 0,2 Gew.-%, bezogen auf die Summe der Komponenten A) bis C).

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt von 0,2 bis 1,5 Gew.-%, bezogen auf die Summe der Komponenten A) bis C).

Sofern Stabilisatoren auf Basis sterisch gehinderter Phenole verwendet werden, beträgt die Menge an diesen Stabilisatoren vorzugsweise 0,1 bis 1,5 Gew.-%, besonders bevorzugt von 0,2 bis 1 Gew.-%, bezogen auf die Summe der Komponenten A) bis C).

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf die Summe der Komponenten A) bis C).

Verbindungen des ein- oder zweiwertigen Kupfers, z. B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, CuI, CuCN und $Cu_2O$, sowie die zweiwertigen Kupferverbindungen $CuCl_2$, $CuSO_4$, CuO, Kupfer(II)-acetat oder Kupfer(II)stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie NaI, KI, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7, beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard ® 445, N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Hostanox ® PAR24: Handelsprodukt der Firma BASF SE).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von CuI und KI. Eine kommerziell erhältliche Stabilisatormischung, bestehend aus organischen Stabilisatoren und Epoxiden ist beispielsweise Irgatec NC66 von BASF SE. Insbesondere bevorzugt wird eine Wärmestabilisierung ausschließlich auf Basis von CuI und KI. Neben dem Zusatz von Kupfer oder Kupferverbindungen wird die Verwendung weiterer Übergangsmetallverbindungen, insbesondere Metallsalze oder Metalloxide der Gruppe VB, VIB, VIIB oder VIIIB des Periodensystems ausgeschlossen. Darüber hinaus werden der erfindungsgemäßen Formmasse bevorzugt keine Übergangsmetalle der Gruppe VB, VIB, VIIB oder VIIIB des Periodensystems, wie z. B. Eisen- oder Stahlpulver, zugesetzt.

Die erfindungsgemäßen Formmassen enthalten vorzugsweise 0 bis 30 Gew.-%, besonders bevorzugt 0 bis 20 Gew.-%, bezogen auf das Gesamtgewicht der Komponenten A) bis C), mindestens eines Flammschutzmittels als Additiv C). Wenn die erfindungsgemäßen Formmassen mindestens ein Flammschutzmittel enthalten, so vorzugsweise in einer Menge von 0,01 bis 30 Gew.-%, besonders bevorzugt von 0,1 bis 20 Gew.-%, bezogen auf das Gesamtgewichten der Komponenten A) bis C). Als Flammschutzmittel C) kommen halogenhaltige und halogenfreie Flammschutzmittel und deren Synergisten in Frage (siehe auch Gächter/Müller, 3. Ausgabe 1989 Hanser Verlag, Kapitel 11). Bevorzugte halogenfreie Flammschutzmittel sind roter Phosphor, Phosphinsäure- oder Diphosphinsäuresalze , und/oder stickstoffhaltige FS-Mittel wie Melamin, Melamincyanurat, Melaminsulfat, Melaminborat, -oxalat, -phosphat (prim, sec.) oder -pyrophosphat sec., Neopentylglycolborsäuremelamin, Guanidin und dem Fachmann bekannte Derivate davon, sowie polymeres Melaminphosphat (CAS Nr.: 56386-64-2 bzw. 218768-84-4 sowie EP 1095030), Ammoniumpolyphosphat (gegebenenfalls auch in Mischung mit) Trishydroxyethylisocyanurat (EP 584567). Weitere N-haltige oder P-Haltige oder PN-Kondensate als geeignete Flammschutzmittel können der DE 10 2004 049 342 entnommen werden, ebenso die hierfür üblichen Synergisten wie Oxide oder Borate. Geeignete halogenhaltige Flammschutzmittel sind z. B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bisphenol-A mit Epoxiden, bromierte oligomere oder polymere Styrole, Dechloran, welche meist mit Antimonoxiden als Synergisten eingesetzt werden (Für Einzelheiten und weitere Flammschutzmittel: siehe DE-A-10 2004 050 025).

Als Antistatika können in den erfindungsgemäßen Formmassen z. B. Ruß und/oder Kohlenstoffnanoröhrchen eingesetzt werden. Die Verwendung von Ruß kann aber auch zur Verbesserung der Schwarzfärbung der Formmasse dienen. Die Formmasse kann jedoch auch frei von metallischen Pigmenten sein.

Des Weiteren betrifft die vorliegende Erfindung Formkörper, die unter Verwendung von den erfindungsgemäßen Copolyamiden bzw. Polyamid-Formmassen hergestellt werden.

Die erfindungsgemäßen teilaromatischen Polyamide eignen sich vorteilhaft für eine Verwendung zur Herstellung von Formteilen für Elektro- und Elektronikbauteilen und für Automobil-Anwendungen im Hochtemperaturbereich.

Eine spezielle Ausführungsform sind Formkörper in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen.

Eine weiter spezielle Ausführungsform sind Formkörper als oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder als Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines Reglers, eines integrierten Schaltkreises (IC), eines Prozessors, eines Controllers, eines Speichers und/oder eines Sensors.

Die erfindungsgemäßen teilaromatischen Polyamide eignen sich weiterhin speziell für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

Eine spezielle Ausführungsform sind Formkörper als Befestigungselemente elektrischer oder elektronischer Bauteile, wie Abstandshalter, Bolzen, Leisten, Einschubführungen, Schrauben und Muttern.

Insbesondere bevorzugt ist ein Formteil in Form oder als Teil eines Sockels, eines Steckverbinders, eines Steckers oder einer Buchse. Bevorzugt beinhaltet das Formteil Funktionselemente, die eine mechanische Zähigkeit erfordern. Beispiele solcher Funktionselemente sind Filmscharniere, Schnapphaken (Snap-in) und Federzungen.

Im Autoinnenraum ist eine Verwendung für Armaturentafeln, Lenkstockschalter, Sitzteile, Kopfstützen, Mittelkonsolen, Getriebe-Komponenten und Türmodule, im Autoaußenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre, Scheibenwischer sowie Karosserieaußenteile möglich.

Für den Küchen- und Haushaltsbereich ist der Einsatz fließverbesserter Polyamide zur Herstellung von Komponenten für Küchengeräte, wie z. B. Fritteusen, Bügeleisen, Knöpfe, sowie Anwendungen im Garten-Freizeitbereich, z. B. Komponenten für Bewässerungssysteme oder Gartengeräte und Türgriffe möglich.

Die folgenden Beispiele dienen der Verdeutlichung der Erfindung, ohne sie in irgendeiner Weise zu beschränken.

BEISPIELE

Die Herstellung der Copolyamide erfolgte durch Kondensation in der Schmelze in einem mit einem Rührer ausgerüsteten Druckautoklaven. Die jeweiligen Diamine und Dicarbonsäuren und ggf. Lactame wurden eingewogen und anschließend mit 0,03 Gew.-% Natriumhypophosphit als Katalysator versetzt. Der Wassergehalt betrug 15 Gew.-%. Nachdem man den Autoklav mehrere Male mit Stickstoff gespült hatte, wurde die Außentemperatur auf 345 °C eingestellt. Nachdem der Druck im Inneren des Autoklaven 40 bar erreicht hatte wurde innerhalb von 28 min auf Umgebungsdruck entspannt. Das so erhaltene Copolymerisat wird unter ständigem Stickstoffstrom für 15 min nachkondensiert und anschließend durch das Auslassventil als Strang abgelassen und granuliert.

Die in der Tabelle 1 enthaltenen Glasübergangstemperaturen (Tg(2)), Schmelztemperaturen (Tm(2)) und Schmelzwärmen (ΔH(2)) wurden mittels dynamischer Differenzkalorimetrie (DSC) nach der oben beschriebenen Methode gemäß DIN EN ISO 11357-3 bzw. ISO 11357-2:2013 (Bestimmung Tg) bestimmt. Die DSC-Messung wurde jeweils einmal wiederholt, wobei die Probe 5 Minuten bei Schmelztemperatur gehalten wurde, um eine definierte thermische Vorgeschichte des Polyamids sicherzustellen. Dies ist durch den Index "2" an den Messwerten für die Schmelztemperatur und die Schmelzwärme angezeigt. Es wurde jeweils unter Stickstoff in offenen Aluminiumtiegeln bei einer Aufheizrate und Abkühlrate von 20 K/min gemessen..

Es wurden die folgenden Abkürzungen verwendet:

| | |
|---|---|
| HMD | Hexamethylendiamin |
| LL | Laurinlactam |
| T | Terephthalsäure |
| I | Isophthalsäure |
| IPDA | Isophorondiamin |
| MXDA | m-Xylylendiamin |
| MACM | Bis-(3-methyl-4-aminocyclohexyl)methan |
| | |
| 6.T/6.I | Copolyamid aus T, I und HMD |
| 6.T/6.I/MXDA.T/MXDA.I | Copolyamid aus T, I , MXDA und HMD |
| 6.T/6.I/MACM.T/MACM.I | Copolyamid aus T, I , MACM und HMD |
| 6.T/6.I/IPDA.T/IPDA.I | Copolyamid aus T, I , IPDA und HMD |
| 6.T/6.I/12 | Copolyamid aus T, I und LL |
| 6.T/MXDA.T | Copolyamid aus T, MXDA und HMD |
| 6.T/IPDA.T | Copolyamid aus T, IPDA und HMD |

Tabelle 1

| Beispiel-Nr. | Zusammensetzung [1] Polyamid | $T_g(2)$ [K] | $T_m(2)$ [K] | $T_g(2)/ T_m(2)$ | $\Delta H(2)$ [J/g] |
|---|---|---|---|---|---|
| V1 | 6.T/6.I<br>T : I = 70 : 30 | 408 | 593 | 0,69 | 57 |
| V2 | 6.T/6.I<br>T : I = 70 : 30 | 406 | 588 | 0,69 | 55 |
| 1 | 6.T/6.I/MXDA.T/MXDA.I<br>T : I = 70 : 30<br>HMD : MXDA = 90 : 10 | 407 | 560 | 0,73 | 40 |
| 2 | 6.T/6.I/MACM.T/MACM.I<br>T : I = 70 : 30<br>HMD : MACM = 97,5 : 2,5 | 413 | 571 | 0,72 | 45 |
| 3 | 6.T/6.I/IPDA.T/IPDA.I<br>T : I = 76 : 24<br>HMD : IPDA = 90 : 10 | 414 | 578 | 0,72 | 57 |
| 4 | 6.T/6.I/IPDA.T/IPDA.I<br>HMD : IPDA = 86 : 14<br>T : I = 78 : 22 | 421 | 587,5 | 0,72 | 51 |
| 5 | 6.T/6.I/IPDA.T/IPDA.I<br>T : I = 85 : 15<br>HMD : IPDA = 80 : 20 | 435 | 583 | 0,75 | 48 |
| 6 | 6.T/6.I/12<br>T : I = 70 : 30<br>1 Mol-% LL[2] | 410 | 565 | 0,73 | 45 |
| 7 | 6.T/6.I/LL<br>T : I = 70 : 30<br>5 Mol-% LL[2] | 406 | 567 | 0,72 | 40 |

(fortgesetzt)

| Beispiel-Nr. | Zusammensetzung [1] Polyamid | $T_g(2)$ [K] | $T_m(2)$ [K] | $T_g(2)/ T_m(2)$ | $\Delta H(2)$ [J/g] |
|---|---|---|---|---|---|
| 8 | 6.T/MXDA.T HMD : MXDA = 71 : 29 | 423 | 584 | 0,72 | 40 |
| 9 | 6.T/IPDA.T HMD : IPDA = 70 : 30 | 429 | 589 | 0,75 | 45 |
| 1) Mengenverhältnisse in mol/mol 2) Mol-%, bezogen auf Diaminkomponente | | | | | |

## Patentansprüche

1. Teilaromatisches Copolyamid PA auf Basis von Terephthalsäure und Hexamethylendiamin, das wenigstens 68 Mol-% Wiederholungseinheiten aufweist, die von Terephthalsäure und Hexamethylendiamin abgeleitet sind, das eine Schmelzenthalpie $\Delta H(2)$ von wenigstens 40 J/g und ein Verhältnis von Tg(2) zu $T_m(2)$ von wenigstens 0,71 aufweist, wobei

   $T_m(2)$ die Schmelztemperatur in Kelvin bedeutet und

   Tg(2) die Glasübergangstemperatur in Kelvin bedeutet, wobei die Schmelzenthalpie $\Delta H(2)$, die Glasübergangstemperatur Tg(2) und die Schmelztemperatur $T_m(2)$ mittels DSC an einer thermisch konditionierten Probe des Copolyamids PA bestimmt wurden.

2. Copolyamid nach Anspruch 1, enthaltend in einkondensierter Form:

   als Säurekomponente S:

   a) 68 bis 100 Mol-% Terephthalsäure, und
   b) 0 bis 32 Mol-% Isophthalsäure,
   c) 0 bis 10 Mol-% einer oder mehrerer Dicarbonsäuren der Formel HOOC-A-COOH, worin A für einen aliphatischen oder alicyclischen Kohlenwasserstoffrest mit 6bis 16 C-Atomen steht;

   als Diaminkomponente D:

   d) 70 bis 100 Mol-% Hexamethylendiamin,
   e) 0 bis 30 Mol-% eines oder mehrerer Diamine der Formel $H_2N-Q-NH_2$, worin Q für einen gesättigten alicyclischen oder araliphatischen Kohlenwasserstoffrest mit 8 bis 18 C-Atomen steht;

   sowie gegebenenfalls als Lactamkomponente L

   f) 0 bis 10 Mol-% eines oder mehrerer gesättigter, monocyclischer Lactame mit 6 bis 16 C-Atomen;

   wobei

   i. wenigstens eine der Komponenten c), e) und f) in dem Copolyamid PA in einkondensierter Form enthalten sind und die Gesamtmenge der Komponenten c), e) und f) im Bereich von 2 bis 30 Mol-% liegt, wobei die Komponente c) auf die Bestandteile der Säurekomponente und die Komponenten e und f) auf die Bestandteile der Diaminkomponente bezogen sind;
   ii. jeweils die Komponenten a), b) und c) sowie d) und e) zusammen 100 Mol-% ergeben und Komponente f) auf die Molzahl der Aminkomponente D bezogen ist;
   iii. das Molverhältnis der Säurekomponente S zur Aminkomponente D im Bereich von 0,9 : 1 bis 1,1 : 1 liegt.

3. Teilaromatisches Copolyamid PA nach Anspruch 2, bestehend in einkondensierter Form aus

   a) 68 bis 98 Mol-% Terephthalsäure, und
   b) 2 bis 32 Mol-% Isophthalsäure,
   d) 80 bis 98 Moll-% Hexamethylendiamin,

e) 2 bis 20 Mol-% eines oder mehrerer Diamine der Formel $H_2N-Q-NH_2$, worin Q für einen gesättigten alicyclischen oder araliphatischen Kohlenwasserstoffrest mit 8 bis 16 C-Atomen.

4. Copolyamid nach Anspruch 2, bestehend in einkondensierter Form aus:

als Säurekomponente S:

a) 68 bis 95 Mol-% Terephthalsäure, und
b) 5 bis 32 Mol-% Isophthalsäure,

als Diaminkomponente D:

d) 90 bis 100 Mol-% Hexamethylendiamin,
e) 0 bis 10 Mol-% eines oder mehrerer Diamine der Formel $H_2N-Q-NH_2$, worin Q für einen gesättigten aliphatischen, gesättigten alicyclischen oder araliphatischen Kohlenwasserstoffrest mit 8 bis 18 C-Atomen;

sowie als Lactamkomponente L

f) 1 bis 10 Mol-% eines oder mehrerer gesättigter Lactame mit 6 bis 16 C-Atomen.

5. Copolyamid nach einem der Ansprüche 2 oder 4, wobei das Lactam Laurinlactam umfasst oder aus Laurinlactam besteht.

6. Copolyamid nach Anspruch 2, bestehend in einkondensierter Form aus:

als Säurekomponente S:

a) 68 bis 98 Mol-% Terephthalsäure, und
b) 1 bis 31 Mol-% Isophthalsäure,
c) 1 bis 10 Mol-% einer oder mehrerer Dicarbonsäuren der Formel HOOC-A-COOH, worin A für einen aliphatischen oder alicyclischen Kohlenwasserstoffrest mit 6bis 16 C-Atomen steht)

als Diaminkomponente D:

d) 90 bis 100 Mol-% Hexamethylendiamin,
e) 0 bis 10 Mol-% eines oder mehrerer Diamine der Formel $H_2N-Q-NH_2$, worin Q für einen gesättigten aliphatischen, gesättigten alicyclischen oder araliphatischen Kohlenwasserstoffrest mit 8 bis 18 C-Atomen.

7. Copolyamid nach einem der Ansprüche 2 oder 6, wobei die Dicarbonsäure der Formel HOOC-A-COOH ausgewählt ist unter 1,8-Octandisäure, 1,10-Decandisäure, 1,12-Dodecandisäure, 1,14-Tetradecandisäure und deren Gemischen.

8. Copolyamid nach einem der Ansprüche 2 bis 7, wobei das Diamin der Formel $H_2N-Q-NH_2$ ausgewählt ist unter Isophorondiamin (IPDA), Bis-(3-methyl-4-aminocyclohexyl)methan (MACM), 4,4'-(Aminocyclohexyl)methan (PACM), m-Xylylendiamin, p-Xylylendiamin und Mischungen davon.

9. Copolyamid nach Anspruch 8, wobei das Diamin der Formel $H_2N-Q-NH_2$ ISOphorondiamin umfasst oder aus Isophorondiamin besteht.

10. Copolyamid nach einem der vorhergehenden Ansprüche, das eine Glasübergangstemperatur Tg(2) von wenigstens 400 K, bevorzugt von wenigstens 410 K, aufweist.

11. Copolyamid nach einem der vorhergehenden Ansprüche, das eine Schmelztemperatur $T_m(2)$ im Bereich von 560 bis 600 K, insbesondere im Bereich von 570 bis 585 K aufweist.

12. Copolyamid nach einem der vorhergehenden Ansprüche, das eine Schmelzwärme $\Delta H(2)$ von wenigstens 45 J/g aufweist.

13. Polyamid-Formmasse, enthaltend wenigstens ein Copolyamid, wie in einem der Ansprüche 1 bis 12 definiert.

14. Formkörper, hergestellt aus einer Polyamid-Formmasse nach Anspruch 13.

15. Verfahren zur Identifizierung eines teilaromatischen Copolyamids PA auf Basis von Terephthalsäure und Hexamethylendiamin, das wenigstens 68 Mol-% Wiederholungseinheiten aufweist, die von Terephthalsäure und Hexamethylendiamin abgeleitet sind, das gute mechanische Eigenschaften bei erhöhter Temperatur und gleichzeitig eine verbesserte Verarbeitbarkeit, insbesondere bei thermoplastischen Formgebungsverfahren aufweist, **dadurch gekennzeichnet, dass** man die Schmelzenthalpie $\Delta H(2)$, die Glasübergangstemperatur $Tg(2)$ [in Kelvin] und die Schmelztemperatur $T_m(2)$ [in Kelvin] mittels DSC an einer thermisch konditionierten Probe des Copolyamids PA bestimmt und ein Copolyamid auswählt, das eine Schmelzenthalpie $\Delta H(2)$ von wenigstens 40 J/g und ein Verhältnis von $Tg(2) : T_m(2)$ von wenigstens 0,71 aufweist.

Europäisches Patentamt
European Patent Office
Office européen des brevets

## EUROPÄISCHER RECHERCHENBERICHT

Nummer der Anmeldung

EP 13 17 1645

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 738 761 A2 (BASF AG [DE]) 23. Oktober 1996 (1996-10-23) * Seite 2, Zeile 4 - Seite 4, Zeile 41 * * Seite 7, Zeile 9 - Seite 10, Zeile 41; Ansprüche; Beispiel A3; Tabelle 1 * ----- | 1-3,8-15 | INV. C08G69/26 C08G69/36 C08L77/06 |
| X | EP 0 737 719 A2 (BASF AG [DE]) 16. Oktober 1996 (1996-10-16) * Seite 2, Zeile 4 - Seite 4, Zeile 30 * * Seite 11, Zeile 10 - Seite 12, Zeile 2; Ansprüche; Beispiel A3; Tabelle 1 * ----- | 1-3,8-15 | |
| X | EP 0 540 890 A1 (HOECHST CELANESE CORP [US]) 12. Mai 1993 (1993-05-12) * Seite 2, Zeile 31 - Seite 3, Zeile 9; Ansprüche; Beispiel 7; Tabelle 1 * ----- | 1,10, 12-15 | |
| X | EP 2 535 365 A1 (EMS PATENT AG [CH]) 19. Dezember 2012 (2012-12-19) * Absätze [0001], [0007] - [0040]; Ansprüche * ----- | 1,2,4-7, 10-15 | |
| X | EP 2 028 231 A1 (EMS PATENT AG [CH]) 25. Februar 2009 (2009-02-25) * Absätze [0001] - [0005], [0013] - [0061]; Ansprüche * ----- | 6,7 | RECHERCHIERTE SACHGEBIETE (IPC) C08G C08L |

Der vorliegende Recherchenbericht wurde für alle Patentansprüche erstellt

| Recherchenort | Abschlußdatum der Recherche | Prüfer |
|---|---|---|
| München | 21. November 2013 | Otegui Rebollo, Juan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 13 17 1645

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2013

| Im Recherchenbericht angeführtes Patentdokument | Datum der Veröffentlichung | Mitglied(er) der Patentfamilie | Datum der Veröffentlichung |
|---|---|---|---|
| EP 0738761 A2 | 23-10-1996 | DE 19514904 A1<br>EP 0738761 A2<br>ES 2119528 T3<br>US 5783634 A | 24-10-1996<br>23-10-1996<br>01-10-1998<br>21-07-1998 |
| EP 0737719 A2 | 16-10-1996 | DE 19513848 A1<br>EP 0737719 A2<br>US 5780576 A | 17-10-1996<br>16-10-1996<br>14-07-1998 |
| EP 0540890 A1 | 12-05-1993 | KEINE | |
| EP 2535365 A1 | 19-12-2012 | CN 102827471 A<br>EP 2535365 A1<br>JP 2013001906 A<br>KR 20130005220 A<br>US 2012321829 A1 | 19-12-2012<br>19-12-2012<br>07-01-2013<br>15-01-2013<br>20-12-2012 |
| EP 2028231 A1 | 25-02-2009 | AT 493474 T<br>BR PI0803677 A2<br>CN 101372555 A<br>EP 2028231 A1<br>EP 2314644 A1<br>ES 2358132 T3<br>ES 2392792 T3<br>JP 2009079212 A<br>KR 20090021132 A<br>SG 150474 A1<br>US 2009062452 A1 | 15-01-2011<br>26-05-2009<br>25-02-2009<br>25-02-2009<br>27-04-2011<br>05-05-2011<br>13-12-2012<br>16-04-2009<br>27-02-2009<br>30-03-2009<br>05-03-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 310752 A2
- EP 667367 A2
- EP 735082 A
- EP 1245640 A
- EP 0693515 A1
- EP 0976774 A2
- EP 0129195 A1
- EP 0129196 A1
- WO 0228941 A

- US 4019866 A
- EP 0123377 A2
- DE 4329676 A1
- EP 1095030 A
- EP 584567 A
- DE 102004049342
- FR 1025
- DE 102004050025 A

**In der Beschreibung aufgeführte Nicht-Patentliteratur**

- Gächter/Müller. Hanser Verlag, 1989